# EUROPEAN PATENT APPLICATION

(11) **EP 4 759 623 A1**
(43) Date of publication of application: **17.06.2026**
(21) Application number: 24872661.4
(22) Date of filing: 08.07.2024
(51) Int. Cl.: B60L 53/66, B60L 53/30, B60L 58/16

(54) **CHARGING DEVICE, METHOD FOR OPERATING CHARGING DEVICE, AND CHARGING SYSTEM**

(30) Priority: 27.09.2023 KR 20230131184
(71) Applicant: LG Energy Solution, Ltd., Seoul 07335 (KR)
(72) Inventor: LEE, Seok Jun, Daejeon 34122 (KR)
(74) Representative: Plasseraud IP
(86) International application number: PCT/KR2024/009661
(87) International publication number: WO 2025/070950

(57) **Abstract**

According to some embodiments disclosed in this document, a charging device includes a communication module configured to receive battery data about a battery of a vehicle, the battery data being collected by a collection device from a data port of the vehicle, a power supply module configured to supply charging power to the battery based on a charging setting, and a controller configured to derive management data about the battery based on the battery data and the charging setting.

## Description

### [TECHNICAL FIELD]

### CROSS-REFERENCE TO RELATED APPLICATION

This application claims priority to and the benefit of Korean Patent Application No. 10-2023-0131184 filed in the Korean Intellectual Property Office on September 27, 2023, the entire contents of which are incorporated herein by reference.

### TECHNICAL FIELD

The embodiments disclosed in this document relate to a charging device, a method of operating the charging device, and a charging system.

### [BACKGROUND ART]

Recently, research and development on secondary batteries have been actively conducted. Here, secondary batteries refer to rechargeable batteries, encompassing traditional Ni/Cd batteries, Ni/MH batteries, and modern lithium-ion batteries. Among secondary batteries, lithium-ion batteries offer higher energy density compared to traditional Ni/Cd and Ni/MH batteries, and their smaller, lighter design makes them highly useful as power sources for portable devices. Recently, their use has expanded to power electric vehicles, gaining attention as a next-generation energy storage medium.

Charging stations for electric vehicle batteries are becoming increasingly widespread. At charging stations, charging power can be supplied to the battery according to regional charging protocols. Meanwhile, as interest in battery management of electric vehicles increases, there is a growing demand to diagnose the battery status and check the results while the battery is being charged.

### [DISCLOSURE]

### [TECHNICAL PROBLEM]

The embodiments disclosed in this document aim to provide a charging device, a method of operating the charging device, and a charging system capable of diagnosing the battery status while charging the battery at a charging station and providing the results to the driver.

The technical objects of the embodiments disclosed in this document are not limited to the aforesaid, and other objects not described herein with be clearly understood by those skilled in the art from the descriptions below.

### [TECHNICAL SOLUTION]

According to some embodiments disclosed in this document, a charging device includes a communication module configured to receive battery data about a battery of a vehicle, the battery data being collected by a collection device from a data port of the vehicle, a power supply module configured to supply charging power to the battery based on a charging setting, and a controller configured to derive management data about the battery based on the battery data and the charging setting.

According to some embodiments, the controller generates deviation data by comparing estimated data expected to be measured based on the charging setting with actually measured battery data, and derives the management data based on the deviation data.

According to some embodiments, the controller derives profile deviation data by comparing voltage variation profile of the battery during the charging power is supplied with a reference profile, and derives a residual value score of the battery based on the profile deviation data.

According to some embodiments, the controller derives charging deviation data by comparing cumulative output current based on the charging setting with cumulative input current based on the battery data, and derives a charging loss indicator of the battery based on the charging deviation data.

According to some embodiments, the collection device collects the battery data from an on-board diagnostics (OBD) port of the vehicle, and transmits the battery data to the charging device via wireless data communication.

According to some embodiments, the collection device provides at least one of a first vehicle assistance function configured to guide the driving route of the vehicle and a second vehicle assistance function configured to capture a surrounding image of the vehicle, and is mounted in the vehicle via connection to the OBD port.

According to some embodiments, the communication module receives driving data of the vehicle, the driving data being collected by the collection device, and the controller adjusts the management data based on the driving data.

According to some embodiments, the controller derives the management data using battery management software provided by a battery management server, the management data including lifespan score, diagnostic grade, residual value score, and charging loss indicator.

According to some embodiments disclosed in this document, an operating method of a charging device includes receiving battery data about a battery of a vehicle, the battery data being collected by a collection device from a data port of the vehicle, supplying charging power to the battery based on a charging setting, and deriving management data about the battery based on the battery data and the charging setting.

According to some embodiments, the deriving of the management data includes generating deviation data by comparing estimated data expected to be measured based on the charging setting with actually measured battery data, and deriving the management data based on the deviation data.

According to some embodiments, the generating of the deviation data includes deriving profile deviation data by comparing voltage variation profile of the battery during the charging power is supplied with a reference profile, and the deriving of the management data includes deriving a residual value score of the battery based on the profile deviation data.

According to some embodiments, the generating of the deviation data includes deriving charging deviation data by comparing cumulative output current based on the charging setting with cumulative input current based on the battery data, and the deriving of the management data includes deriving a charging loss indicator of the battery based on the charging deviation data.

According to some embodiments disclosed in this document, a charging system includes a collection device configured to collecting battery data about a battery of a vehicle from a data port of the vehicle, and a charging device configured to supply charging power to the battery based on a charging setting and derive management data about the battery based on the battery data and the charging setting.

According to some embodiments, the charging device generates deviation data by comparing estimated data expected to be measured based on the charging setting with actually measured battery data, and derives the management data based on the deviation data.

According to some embodiments, the charging device derives profile deviation data by comparing voltage variation profile of the battery during the charging power is supplied with a reference profile, and derives a residual value score of the battery based on the profile deviation data.

According to some embodiments, the charging device derives charging deviation data by comparing cumulative output current based on the charging setting with cumulative input current based on the battery data, and derives a charging loss indicator of the battery based on the charging deviation data.

According to some embodiments, the collection device collects the battery data from an on-board diagnostics (OBD) port of the vehicle, and transmits the battery data to the charging device via wireless data communication.

According to some embodiments, the collection device provides at least one of a first vehicle assistance function configured to guide the driving route of the vehicle and a second vehicle assistance function configured to capture a surrounding image of the vehicle, and is mounted in the vehicle via connection to the OBD port.

According to some embodiments, the collection device collects driving data of the vehicle, and the charging device adjusts the management data based on the driving data.

According to some embodiments, the charging device derives the management data using battery management software provided by a battery management server, the management data including lifespan score, diagnostic grade, residual value score, and charging loss indicator.

### [ADVANTAGEOUS EFFECTS]

According to the embodiments disclosed in this document, it is advantageous to provide a charging device, a method of operating the charging device, and a charging system capable of diagnosing the battery status while charging the battery at a charging station and providing the results to the driver.

The advantageous effects of the process management apparatus and method according to the embodiments disclosed in this document are not limited to the aforesaid, and other effects not described herein with can be clearly understood by those skilled in the art from the descriptions below.

### [DESCRIPTION OF DRAWINGS]

FIG. 1 illustrates components constituting a battery management system according to some embodiments.
FIG. 2 illustrates components constituting a charging system according to some embodiments.
FIG. 3 illustrates a method for a collection device to collect and transmit battery data according to some embodiments;
FIG. 4 illustrates information collected directly by a charging device from a vehicle according to some embodiments;
FIG. 5 illustrates information collected by a charging device through a collection device according to some embodiments;
FIG. 6 illustrates information provided by a charging device to the vehicle's driver according to some embodiments;
FIGS. 7 and 8 illustrate a process of deriving management data based on battery data and charging settings according to some embodiments; and
FIG. 9 illustrates operations constituting a method of operating a charging system according to some embodiments.

### [MODE FOR INVENTION]

Hereinafter, the embodiments described in this document are detailed with reference to the accompanying drawings. However, this does not intend to limit the disclosure of this document to specific embodiments, and should be understood to encompass various modifications, equivalents, and/or alternatives of the embodiments disclosed herein.

The embodiments and terms used in this document are not intended to limit the technical features disclosed in this document to specific embodiments, and should be understood to encompass various modifications, equivalents, or alternatives to the disclosed embodiments. In connection with the description of the drawings, like reference numbers may be used for like or related elements. The singular form of a noun corresponding to an item may include one item or a plurality of items unless the relevant context clearly dictates otherwise.

In this document, each of the phrases such as "A or B", "at least one of A and B", "at least one of A or B", "A, B or C", "at least one of A, B and C", and "at least one of A, B, or C" may include any of the items listed together in the corresponding phrase or any possible combination thereof. Terms such as "the first", "the second", "first", "second", "A", "B", "(a)", or "(b)" may be used simply to distinguish such components from other components and do not limit the corresponding components in other aspects (such as importance or order), unless otherwise stated specifically.

In this document, when it is mentioned that a (e.g., first) component is "connected", "coupled", "accessed", with or without the terms "functionally" or "communicatively", to another (e.g., second) component, it means that the component can be connected to the other component directly (e.g., wired or wirelessly) or indirectly (e.g., through a third component).

The methods according to various embodiments disclosed in this document can be included and provided in a computer program product. The computer program product may be traded between sellers and buyers as commodities. A computer program product can be distributed in the form of a device-readable storage medium (e.g., compact disc read-only memory, CD-ROM), or it can be distributed directly, online, between two user devices, or through an application store (e.g., download or upload). In the case of online distribution, at least part of the computer program product may be temporarily stored or temporarily created in a device-readable storage medium such as a manufacturer's server, an application store server, or a relay server's memory.

According to the embodiments disclosed in this document, each of the described components (e.g., modules or programs) may include one or more entities, and some of the plurality of entities may be separately arranged in other components. According to the embodiments disclosed in this document, one or more components or operations may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component of the plurality of components prior to the integration. According to the embodiments disclosed in this document, operations performed by modules, programs, or other components are executed sequentially, in parallel, iteratively, or heuristically, or one or more of the operations are executed in a different order, omitted, or one or more other operations may be added.

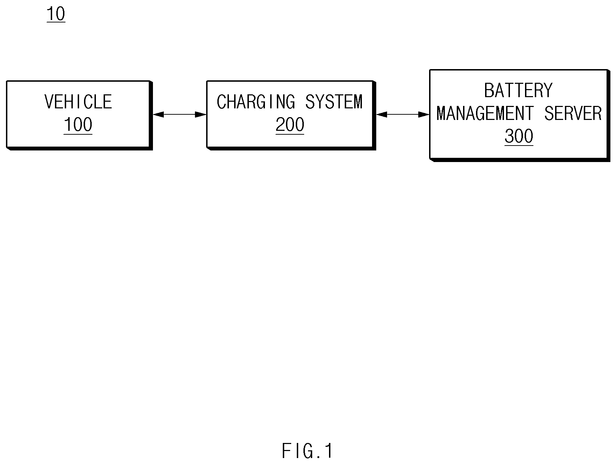

FIG. 1 illustrates components constituting a battery management system according to some embodiments.

With reference to FIG. 1, the battery management system 10 may include a vehicle 100, a charging system 200, and a battery management server 300. However, this is not limiting, and some components may be omitted from the battery management system 10, or other general components may be further included in the battery management system 10.

The battery management system 10 may refer to a system designed to diagnose and manage the state of the battery of the vehicle 100 while the battery of the vehicle 100 is being charged by the charging system 200 of an electric vehicle battery charging station. According to an embodiment, the charging system 200 and the battery management system 10 may exchange data via a wireless communication network.

The vehicle 100 may include vehicles using secondary batteries as power sources, such as electric vehicles (EVs) and hybrid electric vehicles (HEVs). The vehicle 100 may include a battery, and the driver of the vehicle 100 may visit a charging station to charge the battery.

The charging system 200 charges the battery of the vehicle 100. The charging system 200 generates and provides management data to the driver for battery status management while charging the battery. According to an embodiment, the charging system 200 may include a power supply means for charging the battery and a data collection means for generating management data.

The battery management server 300 may manage or assist the battery management operation of the charging system 200. The battery management server 300 may exchange data with the charging system 200 in a wired or wireless communication manner. When management data for the battery of the vehicle 100 is derived, the results may be delivered to the battery management server 300 and recorded in a database.

According to an embodiment, the charging system 200 may perform battery management operations by executing battery management software, and the battery management server 300 may provide update information for the battery management software to the charging system 200. According to an embodiment, the battery management server 300 may perform operations for managing the battery of the vehicle 100 on behalf of the charging system 200. The charging system 200 may transmit the required data for deriving management data to the battery management server 300, and the battery management server 300 may directly process operations for deriving management data based on this, and then provide the result to the charging system 200.

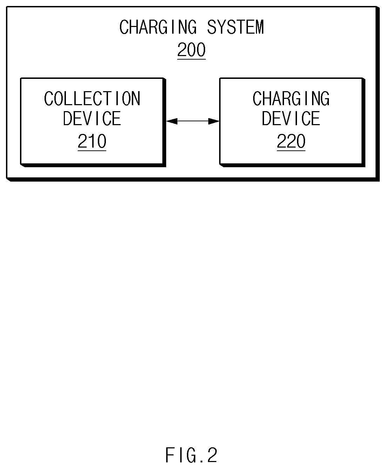

FIG. 2 illustrates components constituting a charging system according to some embodiments.

With reference to FIG. 2, the charging system 200 may include a collection device 210 and a charging device 220. However, this is not limiting, and some components may be omitted from the charging system 200, or other general components may be further included in the charging system 200.

The collection device 210 may be configured to collect battery data from the battery of the vehicle 100. According to an embodiment, the vehicle 100 may have an on-board diagnostics (OBD) port formed to provide vehicle data about the vehicle 100, and the collection device 210 may collect vehicle data through the OBD port. Vehicle data may include driving data related to the operation of the vehicle 100 and battery data related to the battery of the vehicle 100.

The charging device 220 may perform a first function of supplying charging power to the battery of the vehicle 100 and a second function of diagnosing and managing the battery status based on the battery data collected from the battery of the vehicle 100 via the collection device 210. According to an embodiment, the charging device 220 may provide information about the charging results and the battery status to the driver of the vehicle 100 once the battery is fully charged.

The collection device 210 and the charging device 220 may exchange data via wireless data communication. According to an embodiment, the collection device 210 and the charging device 220 may communicate via Bluetooth low energy (BLE), wireless local area network (WLAN, Wi-Fi), or the like. According to an embodiment, the collection device 210 may be connected to the OBD port of the vehicle 100 and may be mounted inside or outside the vehicle 100. When the vehicle 100 enters a charging station and positions near the charging device 220, the collection device 210 may transmit battery data to the charging device 220 through wireless data communication.

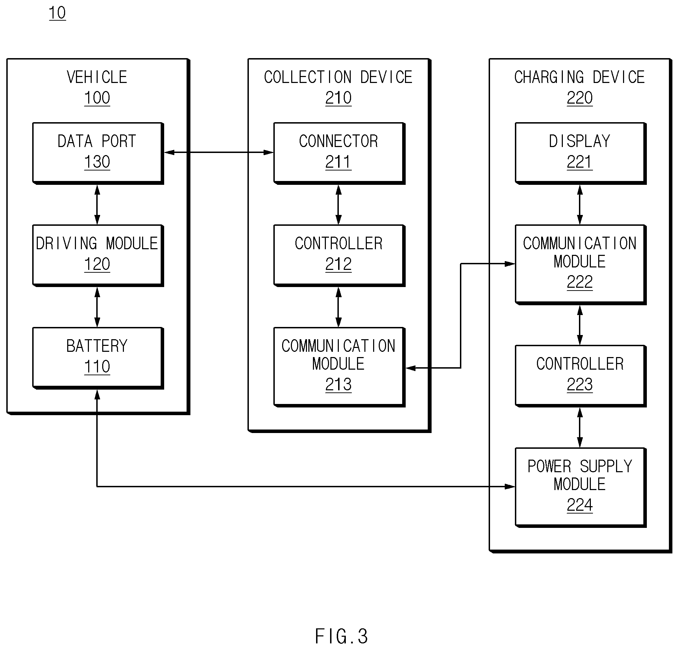

FIG. 3 illustrates a method for a collection device to collect and transmit battery data according to some embodiments.

FIG. 3 illustrates an exemplary structure where the vehicle 100, the collection device 210, and the charging device 220 communicate within the battery management system 10.

The vehicle 100 may include a battery 110, a drive module 120, and a data port 130. The battery 110 may supply power to the drive module 120 and other electronic devices of the vehicle 100, while the drive module 120 may include motors for driving the vehicle 100. According to an embodiment, the data port 130 may include an OBD port, which may be connected to the connector 211 of the collection device 210.

The collection device 210 may include a connector 211 for communicating with the vehicle 100, a communication module 213 for communicating with the charging device 220, and a controller 212 for controlling the operations of the collection device 210. According to an embodiment, the connector 211 may collect battery data related to the battery and driving data of the vehicle 100 via the data port 130 using the diagnostic controller area network (DCAN) communication protocol. The communication module 213 may include a short-range wireless communication module for communication with the charging device 220.

The charging device 220 may include a display 221, a communication module 222, a controller 223, and a power supply module 224. The communication module 222 may receive battery data and driving data from the communication module 213 of the collection device 210 via short-range wireless communication. The controller 223 may perform a first function of supplying power to the battery 110 and a second function of diagnosing and managing the status of the battery 110. The power supply module 224 may include a charging connector to supply power to the battery 110. The display 221 may display the results of the first and second functions to the driver of the vehicle 100.

The controller 212 of the collection device 210 and the controller 223 of the charging device 220 may include a memory and a processor. The processors of the controllers 212 and 223 may be configured to execute instructions implementing the operations of the charging system 200. The processors may be implemented as an array of various logic gates or a general-purpose microprocessor and may include a single processor or multiple processors. For example, the processor may be implemented in at least one form of micro control unit (MCU), central processing unit (CPU), graphics processing unit (GPU), or application processor (AP).

The memory of controllers 212 and 223 may be configured to store various data, instructions, software, mobile applications, computer programs, and the like. The memory may be configured separately or integrally with the processor. The processors of the controllers 212 and 223 may execute instructions stored in memory to perform various operations. For example, memory may be implemented as non-volatile devices such as read-only memory (ROM), programmable read-only memory (PROM), erasable programmable read-only memory (EPROM), electrically erasable programmable read-only memory (EEPROM), flash memory, phase-change RAM (PRAM), magnetoresistive RAM (MRAM), resistive RAM (RRAM), and ferroelectric RAM (FRAM), and volatile devices such as dynamic RAM (DRAM), static RAM (SRAM), synchronous DRAM (SDRAM), phase-change RAM (PRAM), or in the form of hard disk drive (HDD), solid-state drive (SSD), secure digital (SD), and micro-SD, or a combination of these.

The collection device 210 may be configured to collect battery data related to the battery 110 of the vehicle 100 from the data port 130 of the vehicle 100. According to an embodiment, the battery data may include voltage, current, and temperature taken at the cells, modules, packs, or other units of the battery 110.

The charging device 220 may be configured to supply charging power to the battery 110 based on charging settings. Charging settings may refer to conditions related to the charging of the battery 110 and may include charging speed, charging amount, charging time, and charging fee. Charging speed may include normal speed, fast charging, etc. According to an embodiment, the charging settings may be selected by the driver of the vehicle 100.

The charging device 220 may be configured to derive management data regarding the battery 110 based on battery data and charging settings. Charging settings represent the intended charging specifications for the battery 110 before charging starts, while battery data refers to data measured as a result of charging while charging power is supplied to the battery 110. Therefore, considering battery data and charging settings together, various management indicators may be derived for diagnosing and managing the state of the battery 110.

The charging device 220 may be configured to provide management data to the driver of the vehicle 100. According to an embodiment, the charging device 220 may display management data through the display 221. According to an embodiment, the charging device 220 may provide management data in the form of notification messages through a mobile terminal of the driver in the vehicle 100.

According to an embodiment, the charging device 220 may be configured to generate deviation data by comparing estimated data based on charging settings with actually measured battery data, and derive management data based on the deviation data. Estimated data may refer to data expected to be measured from the battery 110 for a given charging setting. According to an embodiment, estimated data may include charging history data in beginning-of-life (BOL) state. Alternatively, estimated data may include average charging data for other batteries of the same model as the battery 110. Considering the deviation between actually measured battery data and expected data, management data may be derived to estimate the degradation of the lifespan or performance of the battery 110 compared to early-life or average values.

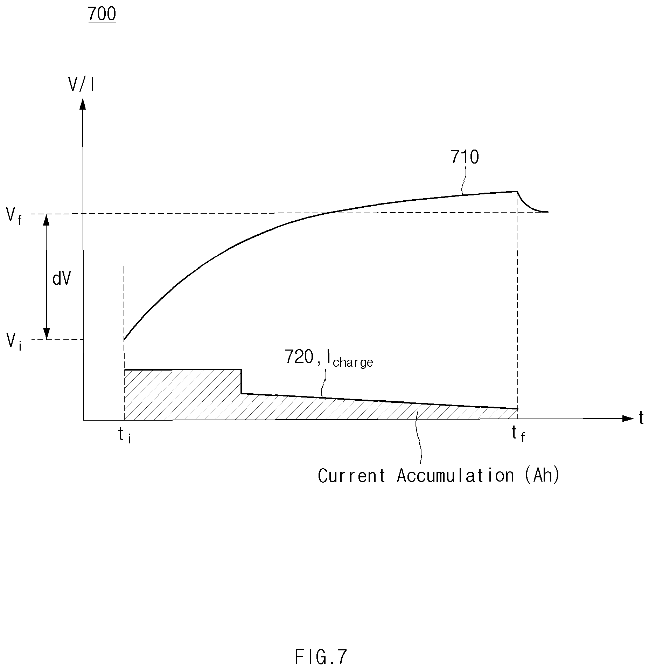

According to an embodiment, the charging device 220 may be configured to derive profile deviation data by comparing the voltage variation profile of the battery 110 during charging power supply with a reference profile, and to derive the residual value score of the battery 110 based on the profile deviation data. The profile comparison will be described later with reference to FIG. 7. Voltage variation profiles may be generated by recording voltage measurements of the battery 110 during power supply, and the residual value score may be derived by comparing these profiles to a reference profile. According to an embodiment, the reference profile may include charging profiles recorded at the BOL state of the battery 110, and average profile of other batteries of the same model.

According to an embodiment, the charging device 220 may be configured to derive charging deviation data by comparing the cumulative output current according to the charging setting with the cumulative input current according to the battery data, and then derive a charging loss indicator of the battery 110 based on the charge deviation data. The cumulative current comparison will be described later with reference to FIG. 7. The larger the difference between the charging amount output from the charging device 220 and the charging amount input to the battery 110, the higher the charging loss indicator may be.

According to an embodiment, the collection device 210 may be configured to collect battery data from the OBD port of the vehicle 100 and transmit the battery data to the charging device 220 via wireless data communication. The collection device 210 may collect battery data from the OBD port using the DCAN communication method and transmit the collected data to the charging device 220 via BLE, WLAN, Wi-Fi, or the like.

According to an embodiment, the collection device 210 may provide at least one of the first vehicle assistance function that guides the driving route of the vehicle 100 and the second vehicle assistance function that captures the surrounding images of the vehicle 100, and may be mounted in the vehicle 100 via connection to the OBD port. According to an embodiment, the collection device 210 may be integrated with a navigation device that provides the first vehicle assistance function. Alternatively, the collection device 210 may be integrated with a black box device that provides the second vehicle assistance function. The collection device 210 may be attached to the interior or exterior of the vehicle 100. According to an embodiment, the collection device 210 may be mounted near the OBD port located inside the vehicle 100.

According to an embodiment, the collection device 210 may be further configured to collect driving data related to the driving of the vehicle 100, and the charging device 220 may be further configured to adjust management data based on the driving data. The driving data may include the driving distance, speed, steering angle, acceleration information, and deceleration information of the vehicle 100. For example, the lifespan score of the battery 110 may be adjusted downward considering the driving distance of the vehicle 100. Alternatively, the lifespan score of the battery 110, diagnostic grade, residual value score, and other indicators may be additionally adjusted based on the number of rapid accelerations or decelerations of the vehicle 100.

According to an embodiment, the charging device 220 may be configured to derive management data using battery management software provided from the battery management server 300, and the management data may include the lifespan score, diagnostic grade, residual value score, and charging loss indicator of the battery 110. Management data may be derived through battery management software managed by the battery management server 300. The battery management software may be continuously updated to produce optimal management indicators. Therefore, the accuracy of the battery management software may be higher than the values estimated by the battery management system (BMS) of the battery 110. For this purpose, the battery management server 300 may provide update information of the battery management software to the charging device 220.

According to an embodiment, instead of the charging device 220 deriving management data using battery management software, the battery management server 300 may be configured to directly derive management data. The charging device 220 may provide the battery data and charging settings required to derive management data to the battery management server 300, and the battery management server 300 may derive management data based on these and then provide the management data to the charging device 220. In this manner, the computational burden on the charging device 220 may be reduced, and the hardware efficiency of the charging device 220 may be improved.

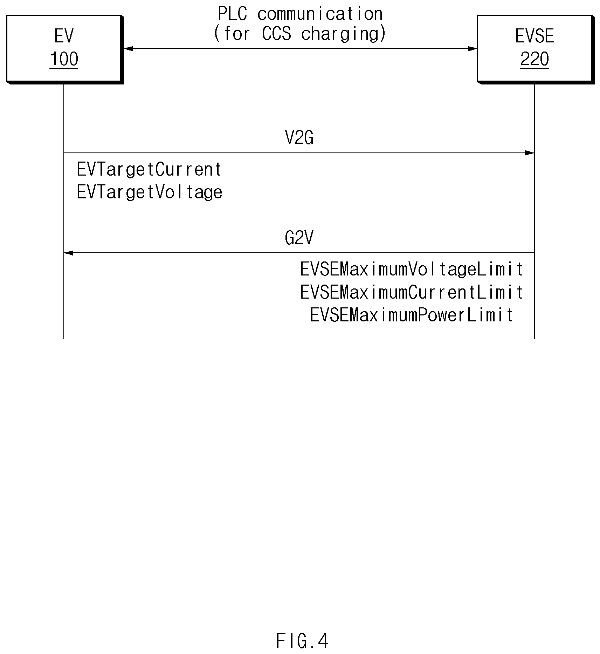

FIG. 4 illustrates information collected directly by a charging device from a vehicle according to some embodiments.

With reference to FIG. 4, vehicle 100 and the charging device (electrical vehicle supply equipment, EVSE) 220 may exchange the minimum information necessary for charging via power line communication (PLC) in the case of the combined charging system (CCS) protocol. Meanwhile, for other charging protocols such as CHAdeMO, communication methods other than PLC may be applied.

In the case of vehicle-to-grid (V2G), the vehicle 100 may provide the charging device 220 with target values for battery charging. The target values for battery charging may include the target current (EVTargetCurrent) and the target voltage (EVTargetVoltage). According to an embodiment, the target values for battery charging may be the charging settings set to provide charging power to the battery 110.

Conversely, in the case of grid-to-vehicle (G2V), the EVSE 220 may provide the vehicle 100 with limit values for battery charging. The limit values for battery charging may include the maximum voltage limit (EVSEMaximumVoltageLimit), the maximum current limit (EVSEMaximumCurrentLimit), and the maximum power limit (EVSEMaximumPowerLimit). As shown in the drawing, when only the EVSE 220 exists without the collection device 210, it may be difficult to derive management data for the battery 110, as only the minimum information necessary for charging is exchanged.

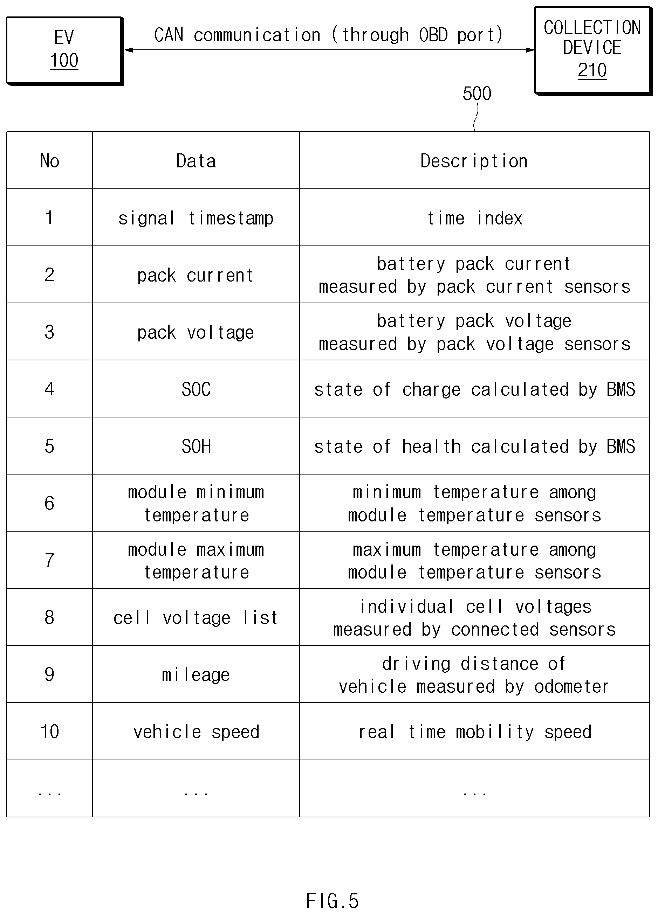

FIG. 5 illustrates information collected by a charging device through a collection device according to some embodiments.

With reference to FIG. 5, vehicle data 500 provided by the collection device 210 to the EV 100 is shown. For example, the vehicle data 500 may include battery data 1 to 8 and driving data 9 and 10.

The battery data within the vehicle data 500 may include the current and voltage of the battery pack, the maximum and minimum temperatures of the battery module, and a voltage list of the battery cells. The battery data may further include the state of charge (SOC) and state of health (SOH). For example, SOC and SOH may be estimated by the battery management system (BMS) of battery 110.

Because battery data and driving data such as vehicle data 500 can be provided to the charging device 220, the charging device 220 may derive management data for battery 110 by comparing the battery data with the charging settings and finely adjust the management data based on the driving data. According to an embodiment, the vehicle data 500 may be collected via the DCAN communication method through the OBD port of the vehicle 100.

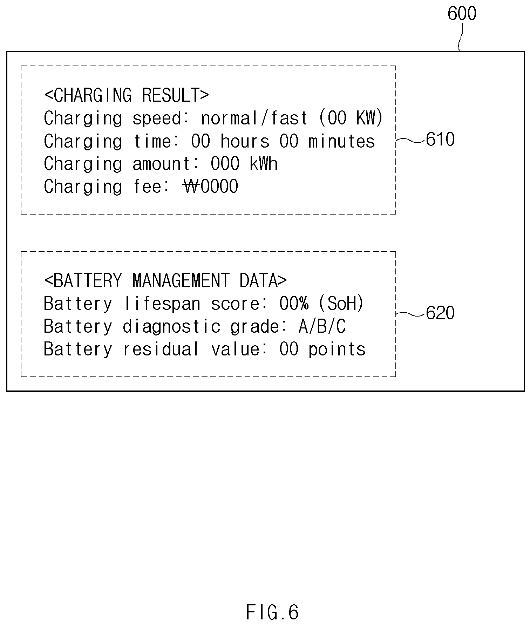

FIG. 6 illustrates information provided by a charging device to the vehicle's driver according to some embodiments.

With reference to FIG. 6, an example screen 600 provided to the driver of the vehicle 100 through the display 221 of the charging device 220 is shown. The example screen 600 may include charging result information 610 and battery management data 620. According to an embodiment, the example screen 600 may be displayed on the mobile device of the driver instead of the display 221.

The charging result information 610 may include details such as charging speed, charging time, charging amount, and charging fee. The driver may confirm whether the battery of the vehicle 100 has been charged successfully by reviewing the charging result information 610.

The battery management data 620 may include battery lifespan score, battery diagnostic grade, and battery residual value. The charging device 220 or the battery management server 300 may derive the battery management data 620 using battery management software. The battery lifespan score may be expressed as a unit of state of health (SOH) ranging from 0% to 100%. The battery diagnostic grade may be classified as grade A, grade B, grade C, etc., according to the internal criteria of the battery management software. The battery residual value may be expressed as a score ranging from 0 to 100. The battery management data 620 may further include a charging loss indicator.

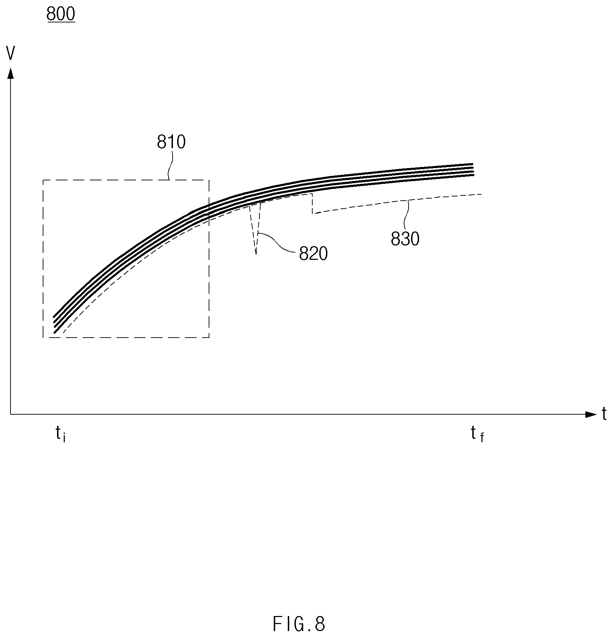

FIGS. 7 and 8 illustrate a process of deriving management data based on battery data and charging settings according to some embodiments.

With reference to FIG. 7, a graph 700 representing the battery data collected by the diagnostic device 210 is shown.

The graph 700 may include voltage variation profile 710 and current variation profile 720 I_{charge} of the battery 110 from the charging start time tᵢ to charging end time t_{f}. The voltage variation profile 710 may show variation from initial voltage Vᵢ at charging start time tᵢ to final voltage V_{f} at charging end time t_{f}.

The voltage variation profile 710 may be compared with a reference profile. According to an embodiment, the reference profile may be a profile measured at BOL state of the battery 110, or an average profile from other batteries of the same model as the battery 110. It is possible to calculate the amount of parallel shift of voltage variation profile 710 from the reference profile and derive the residual value score, lifespan score, and diagnostic grade of battery 110 based on this amount.

The current variation profile 720 may show variation of current inputted into battery 110 from charging start time tᵢ to charging end time t_{f}. Accumulating current input from charging start time tᵢ to charging end time t_{f} may calculate cumulative current (current accumulation), which may be utilized to calculate charging loss. According to an embodiment, cumulative output current of the power supply module 224) of charging device 220 may be compared with cumulative input current, and based on the difference, the charging loss indicator of battery 110 may be calculated.

With reference to FIG. 8, a graph 800 representing the voltages of a plurality of battery cells constituting the battery 110 is shown.

The profiles 810 in the graph 800 may represent the voltage variations of each of the plurality of battery cells. When a voltage spike 820 or a voltage discontinuity 830 occurs in the first battery cell among the plurality of battery cells, the battery management software may diagnose an anomaly in the first battery cell. In this manner, the battery management system 10 may diagnose battery cell anomalies with higher accuracy than the anomaly detection accuracy of the BMS of the battery 110.

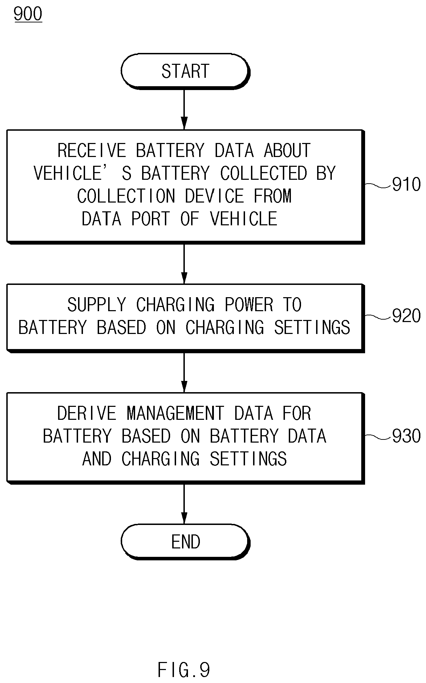

FIG. 9 illustrates operations constituting a method of operating a charging system according to some embodiments.

With reference to FIG. 9, the operating method 900 of the charging device 220 may include operations 910 to 940. However, this is not limiting, as some operations may be omitted or other general operations may be added, and the operations of the operating method 900 may be performed in an order different from those depicted in the drawing.

The operating method 900 of the charging device 220 may include operations sequentially processed by the charging device 220. Therefore, even though the following details are omitted, the descriptions provided above regarding the charging device 220 may equally apply to the operating method 900.

Operations 910 to 930 of the operating method 900 of the charging device 220 may be performed by the communication module, power supply module, and controller of the charging device 220.

In operation 910, the charging device 220 may receive battery data related to the battery of the vehicle, the battery data being collected from the data port of the vehicle by the collection device.

In operation 920, the charging device 220 may provide charging power to the battery based on charging settings.

In operation 930, the charging device 220 may derive management data about the battery based on battery data and charging settings.

According to an embodiment, the operating method 900 of the charging device 220 may be implemented in the form of a computer program stored on a computer-readable storage medium. In other words, the computer program may include instructions for implementing the operating method 900, and the instructions of the program may be stored on a computer-readable storage medium. The computer program may include a mobile application.

According to an embodiment, the computer-readable storage medium may encompass magnetic media such as hard disks, floppy disks, and magnetic tapes, optical media such as CD-ROMs and DVDs, magneto-optical media such as floptical disks, and hardware devices specially configured to store and execute computer program instructions, such as ROMs, RAMs, and flash memory. The computer program instructions may include machine code generated by a compiler and high-level language code executable by a computer using interpreters or the like.

Also, the terms such as "comprise", "include", or "have" used above implies that the corresponding component may be present unless otherwise stated specifically, and thus it should be construed as being able to further include other components rather than exclude other components. Unless otherwise defined, all terms, including technical or scientific terms used herein, have the same meanings as commonly understood by those skilled in the art to which the embodiments disclosed in this invention belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

The above description is only an illustrative example of the technical idea disclosed in this document, and those skilled in the art to which the embodiments disclosed in this document belong will be able to make various modification and changes without departing from the subject matter of the embodiments disclosed in this document. Therefore, the embodiments disclosed in this document are not intended to limit the technical concept disclosed in this document but are for the purpose of illustration, and the scope of the technical concept disclosed in this document is not limited by these embodiments. The scope of protection for the technical concepts disclosed in this document should be interpreted in accordance with the claims set forth below, and all equivalent technical concepts should be considered as included in the scope of protection of this document.

### DESCRIPTION OF REFERENCE NUMERALS

| | | | |
|---|---|---|---|
| 10: | battery management system | 100: | vehicle |
| 110: | battery | 120: | driving module |
| 130: | data port | 200: | charging system |
| 210: | collection device | 211: | connector |
| 212: | controller | 213: | communication module |
| 220: | charging device | 221: | display |
| 222: | communication module | 223: | controller |
| 224: | power supply module | 300: | battery management server |

## Claims

1. A charging device comprising:
a communication module configured to receive battery data about a battery of a vehicle, the battery data being collected by a collection device from a data port of the vehicle;
a power supply module configured to supply charging power to the battery based on a charging setting; and
a controller configured to derive management data about the battery based on the battery data and the charging setting.

2. The charging device of claim 1, wherein the controller generates deviation data by comparing estimated data expected to be measured based on the charging setting with actually measured battery data, and derives the management data based on the deviation data.

3. The charging device of claim 2, wherein the controller derives profile deviation data by comparing voltage variation profile of the battery during the charging power is supplied with a reference profile, and derives a residual value score of the battery based on the profile deviation data.

4. The charging device of claim 2, wherein the controller derives charging deviation data by comparing cumulative output current based on the charging setting with cumulative input current based on the battery data, and derives a charging loss indicator of the battery based on the charging deviation data.

5. The charging device of claim 1, wherein the collection device collects the battery data from an on-board diagnostics (OBD) port of the vehicle, and transmits the battery data to the charging device via wireless data communication.

6. The charging device of claim 5, wherein the collection device provides at least one of a first vehicle assistance function configured to guide the driving route of the vehicle and a second vehicle assistance function configured to capture a surrounding image of the vehicle, and is mounted in the vehicle via connection to the OBD port.

7. The charging device of claim 1, wherein the communication module receives driving data of the vehicle, the driving data being collected by the collection device, and the controller adjusts the management data based on the driving data.

8. The charging device of claim 1, wherein the controller derives the management data using battery management software provided by a battery management server, the management data comprising lifespan score, diagnostic grade, residual value score, and charging loss indicator.

9. An operating method of a charging device, the method comprising:
receiving battery data about a battery of a vehicle, the battery data being collected by a collection device from a data port of the vehicle;
supplying charging power to the battery based on a charging setting; and
deriving management data about the battery based on the battery data and the charging setting.

10. The method of claim 9, wherein the deriving of the management data comprises:
generating deviation data by comparing estimated data expected to be measured based on the charging setting with actually measured battery data; and
deriving the management data based on the deviation data

11. The method of claim 10, wherein the generating of the deviation data comprises deriving profile deviation data by comparing voltage variation profile of the battery during the charging power is supplied with a reference profile, and the driving of the management data comprises deriving a residual value score of the battery based on the profile deviation data.

12. The method of claim 10, wherein the generating of the deviation data comprises deriving charging deviation data by comparing cumulative output current based on the charging setting with cumulative input current based on the battery data, and the deriving of the management data comprises deriving a charging loss indicator of the battery based on the charging deviation data.

13. A charging system comprising:
a collection device configured to collecting battery data about a battery of a vehicle from a data port of the vehicle; and
a charging device configured to supply charging power to the battery based on a charging setting and derive management data about the battery based on the battery data and the charging setting.

14. The charging system of claim 13, wherein the charging device generates deviation data by comparing estimated data expected to be measured based on the charging setting with actually measured battery data, and derives the management data based on the deviation data.

15. The charging system of claim 14, wherein the charging device derives profile deviation data by comparing voltage variation profile of the battery during the charging power is supplied with a reference profile, and derives a residual value score of the battery based on the profile deviation data.

16. The charging system of claim 14, wherein the charging device derives charging deviation data by comparing cumulative output current based on the charging setting with cumulative input current based on the battery data, and derives a charging loss indicator of the battery based on the charging deviation data.

17. The charging system of claim 13, wherein the collection device collects the battery data from an on-board diagnostics (OBD) port of the vehicle, and transmits the battery data to the charging device via wireless data communication.

18. The charging system of claim 17, wherein the collection device provides at least one of a first vehicle assistance function configured to guide the driving route of the vehicle and a second vehicle assistance function configured to capture a surrounding image of the vehicle, and is mounted in the vehicle via connection to the OBD port.

19. The charging system of claim 13, wherein the collection device collects driving data of the vehicle, and the charging device adjusts the management data based on the driving data.

20. The charging system of claim 13, wherein the charging device derives the management data using battery management software provided by a battery management server, the management data comprising lifespan score, diagnostic grade, residual value score, and charging loss indicator.
